# EUROPEAN PATENT APPLICATION

(11) **EP 4 675 453 A1**
(43) Date of publication of application: **07.01.2026**
(21) Application number: 25185257.0
(22) Date of filing: 25.06.2025
(51) Int. Cl.: G06F 15/78, G06F 9/38, G06F 15/173, G06F 9/50

(54) **MANAGEMENT CIRCUIT FOR HIGH-BANDWIDTH MEMORY WITH MULTIPLE PROCESSING ELEMENTS**

(30) Priority: 28.06.2024 US 202463666105 P; 19.09.2024 US 202463696802 P; 05.06.2025 US 202519230061
(71) Applicant: Samsung Electronics Co., Ltd., Suwon-si, Gyeonggi-do 16677 (KR)
(72) Inventor: ZHANG, Tong, San Jose, CA, 95134 (US); ZENG, Jianping, San Jose, CA, 95134 (US); ZHANG, Da, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A management technique for high bandwidth memory is disclosed. A processing management circuit (PMC) has a main executing circuit and a main memory and is configured to manage at least one processor operation performed by at least one of a first processing element (PE) or a second PE. A shared memory is configured to be shared by the PMC, the first PE, and the second PE. A memory management circuit (MMC) is configured to manage a memory operation on the shared memory based on a memory access by at least one of the PMC, the first PE, or the second PE. The at least one processor operation includes at least one of a program launch, a program execution, and an interrupt delivery.

## Description

### TECHNICAL FIELD

The disclosure generally relates to computer architecture. More particularly, the subject matter disclosed herein relates to management circuits for high-bandwidth memory in a multiprocessor system.

### BACKGROUND

The present background section is intended to provide context only, and the disclosure of any concept in this section does not constitute an admission that said concept is prior art.

Advances in data science, artificial intelligence (AI), and machine learning (ML) have led to transformative changes in technologies across various industries. To accommodate these changes, semiconductor devices and systems have also been developed with new technologies including computing architecture, processor and memory designs, network security, and communication interfaces. Among these developments, memory designs or interfaces have become more and more significant, especially in applications that require low power and small physical spaces such as mobile devices.

Among the advanced memory designs and interfaces, wide-input/output (IO) interface has become popular for three-dimensional (3D) or highly dense integrated circuits (ICs) such as low power double data rate (LPDDR) dynamic random access memory (DRAM) (e.g., LPDDR6). In particular, High Bandwidth Memory (HBM) has become popular in high performance applications including Graphic Processing Unit (GPU), Al, and ML. These applications demand a very high bandwidth in excess of 1 Terabyte (TB)/s with low latency and low power consumption. However, systems involving HBM devices and interfaces face numerous challenges, especially in architectural design. In a typical high-performance system, multiple processing elements are employed to perform parallel tasks or distributed workload. Due to the complexities of the computations, communications, program executions and memories accesses, many designs do not fully exploit the power of HBM and multiple processing elements. Memories are often underutilized, and processing elements do not effectively communicate with one another.

The above information disclosed in this Background section is only for enhancement of understanding of the background of the disclosure and therefore it may contain information that does not constitute prior art.

### SUMMARY

To overcome these issues, systems and methods are described herein for a technique of managing memory circuits and processing elements. The technique aims at providing an efficient structure for utilizing high bandwidth memory devices in a multi-processor environment. Advantages of the technique include simple structure with single unified address space, efficient memory control including easy detection of access violations, improved memory performance, effective inter-processor communication, and increased fault-tolerance and scalability.

In an embodiment, a management technique for high bandwidth memory with multiple processing elements is disclosed. A shared memory is configured to be shared by a first processing element (PE) and a second PE. A processing management circuit (PMC) has a main executing circuit and a main memory and is configured to manage at least one processor operation performed by at least one of the first PE or the second PE. A memory management circuit (MMC) is configured to manage a memory operation on the shared memory based on a memory access by at least one of the first PE or the second PE. The at least one processor operation includes at least one of a program launch, a program execution, and an interrupt delivery. The memory operation includes at least one of a page table update, a translation lookaside buffer (TLB) update, a cache response, and an access violation response.

### BRIEF DESCRIPTION OF THE DRAWINGS

In the following section, the aspects of the subject matter disclosed herein will be described with reference to exemplary embodiments illustrated in the figures, in which:
FIG. 1 is a block diagram illustrating a system according to an embodiment.
FIG. 2 is a diagram illustrating an HBM processing system according to an embodiment.
FIG. 3 is a diagram illustrating a management processor and multiple processing elements according to an embodiment.
FIG. 4 is a diagram illustrating a computational circuit in a processing element according to an embodiment.
FIG. 5 is a diagram illustrating a memory space viewed from a PE according to an embodiment.
FIG. 6 is a diagram illustrating a memory space viewed from the management processor according to an embodiment.
FIG. 7 is a diagram illustrating a sequence of program launching according to an embodiment.
FIG. 8 is a flowchart illustrating a process for managing an HBM system with multiple PE's according to an embodiment.
FIG. 9 is a flowchart illustrating a process of managing a processor operation according to an embodiment.
FIG. 10 is a diagram illustrating a processing system according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "solid-state" in the context of storage refers to a storage technology that uses integrated circuits, instead of moving parts (e.g., spinning disks, platters, read/write heads) to store data. The term "flash memory" refers to a type of non-volatile memory which retains data even when power is removed. It is commonly used in solid-state drives (SSDs). There are two types of flash memory: NAND flash and NOR flash. The NAND flash memory has high storage density and lower cost per bit and is suitable for SSDs, mobile applications. The NOR flash is optimized for random access and is often used in applications requiring fast code execution.

As used herein, the term "buffer" in the context of storage refers to a memory device that store data or information on a temporary basis as part of an operation that involves moving data from one location to another. A buffer is typically implemented by static random-access memory (RAM) for fast access. A buffer may be organized as a standard SRAM or a first-in-first-out (FIFO) organization.

In an embodiment, a management technique for high bandwidth memory with multiple processing elements is disclosed. The technique provides an efficient control and management of HBM devices and interfaces in a system using multiple PEs. In the following, the use of two PEs is for illustrative purposes. The technique may be applied to any number of PEs. A shared memory is configured to be shared by a first PE and a second PE. A processing management circuit (PMC) has a main executing circuit and a main memory and is configured to manage at least one processor operation performed by at least one of the first PE or the second PE. A memory management circuit (MMC) is configured to manage a memory operation on the shared memory based on a memory access by at least one of the first PE or the second PE. The at least one processor operation includes at least one of a program launch, a program execution, and an interrupt delivery. The memory operation includes at least one of a page table update, a translation lookaside buffer (TLB) update, a cache response, and an access violation response

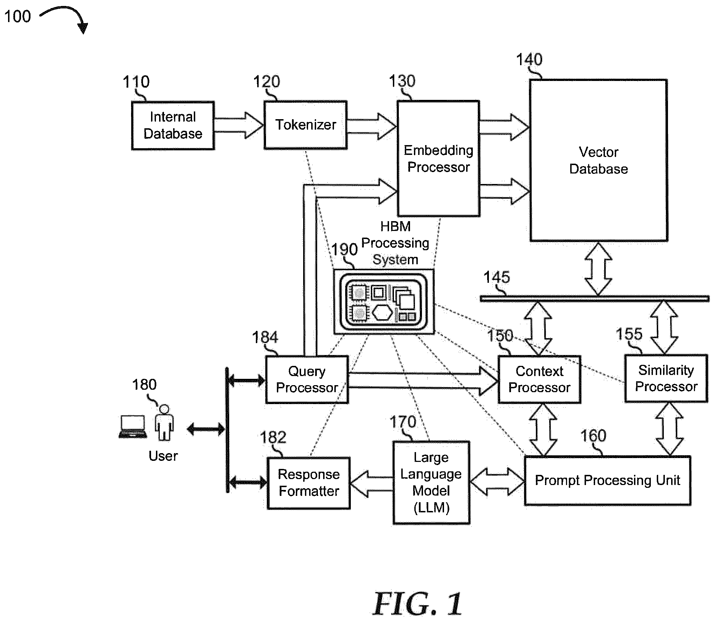

FIG. 1 is a block diagram illustrating a system 100 according to an embodiment. The system 100 illustrates the important role of low power wide-IO solid-state storage devices in a typical AI application. The AI application in the system 100 is a machine learning system with a large language model (LLM). The LLM performs inference and typically includes two main parts: prompt processing and generating response to queries. In a typical application, the LLM needs to fetch huge amounts of data representing model parameters and forward to appropriate processing elements such as central processing unit (CPU), graphics processing unit (GPU), and neural processing unit (NPU), and specialized processors including applications specific integrated circuits (ASICs). The memory requirements for the LLM-based system include high bandwidth RAM and wide-IO NAND flash memory devices.

The system 100 includes an internal database 110, a tokenizer 120, an embedding processor 130, a vector database 140, a connectivity link 145, a context processor 150, a similarity processor 155, a prompt processing unit 160, a large language model (LLM) 170, a response formatter 182, a query processor 184, and an HBM processing system 190. The system 100 may include more or less than the above components. The system 100 illustrates an exemplary architecture of an artificial intelligence (AI) query-and-response application. The system 100 is designed to interact with a user 180. This query-and-response application receives queries from the user 180 and provides the response using the LLM 170. This type of application may be implemented by hardware or software or a combination of both. The reason why this application is used as an example to illustrate the role of the HBM processing system 190 is that it uses very large computational resources including large storages for data and high computations. Whether it is implemented by hardware, software, or a combination of both, the basic component of the system is the HBM processing system 190 that may be used with a processing circuit to perform all or parts of the functions of the tokenizer 120, the embedding processor 130, the context processor 150, the similarity processor 155, the prompt processing unit 160, the LLM 170, the response formatter 182, and the query processor 184. Some of the components may be parts of other components. For example, the tokenizer 120 and the embedding processor 130 may be parts of the LLM 170.

The internal database 110 is a database that stores data or information that is private to an organization and is not available publicly. The query session may be used by an employee of a company and therefore the data may be private or proprietary to the company. The internal database 110 may not be needed if the query is for public information. The tokenizer 120 processes the data from the internal database 110 and prepares for use in subsequent stages. A typical input is a text or a sentence. The tokenizer 120 breaks the text into smaller units, called tokens, which may be a word or a phrase, or a form that can be processed by other units. Typically, this task may include extracting relevant information from the text and represent this information by meaningful numbers. This may be performed by a special program, or a special circuit which may be implemented in an applications-specific integrated circuit (ASIC). Such an ASIC would need to have fast access to memories which store the texts and the tokens. Wide-IO NAND flash devices with interfaces to LPDDR6 devices are useful for this purpose.

The embedding processor 130 operates on the output of the tokenizer and the query processor to convert this textual representation into a numeric representation that follows some predefined format. The embedded representation typically has several fields of numbers which may correspond to relevance, relationship, or any characteristics that are useful for processing. These embedded representations typically form vectors. For example, the textual representation "I love New York" may be embedded into a vector having five fields: [0.312, - 7.215, 3.126, -0.015, 2.761]. The embedding process may be implemented in hardware using the HBM processing system 190 including a processing circuit that calculates the vector representation and storage elements that store information retrieved from the internal database 110. The resulting vectors may be stored in the vector database 140 or may be processed with data read from the vector database 140. The vector database 140 stores vectors that represent domain knowledge and/ or the query. The output of the vector database 140 may be passed to the context processor 150 and the similarity processor 155 via the connectivity link 145 for further processing. The connectivity link 145 may be a bus, a network connection, or any medium that allows data transfers between the vector database 140 and other devices including the context processor 150 and the similarity processor 155.

The context processor 150 provides contextual information to the query or queries. It receives query information from the query processor 184. The contextual information expands the meaning of the query or queries to include information that is relevant to the content of the query or queries and/or user's background and experience. For example, the queries "What is the capital of California?" "What to do in Central California?" and "Where is Yosemite?" may create a context of traveling. This context will obtain vectors that are related to traveling in California including lodging information and attractions. The context processor 150 therefore requires fast computation to perform searches and matching. It also needs a large memory space to store data. The similarity processor 155 performs matching of candidate vectors to the query vector or vectors to locate the vectors that are most relevant to the query. Depending on the format of the query, an appropriate similarity measure may be determined. For example, for vectors with many numerical values, a cosine similarity may be used. This similarity measure requires calculating an inner product and magnitudes of two vectors. When searching for relevant vectors, thousands of such computations may be performed. This number of computations necessitates an ASIC dedicated for similarity computations. Accordingly, the similarity processor 155 may be efficiently implemented by multiple highly integrated circuits that include computational elements in forms of ASIC chiplets for fast and parallel computations. In addition, it should also have a large memory capacity and wide-IO interfaces to provide fast access to the vectors. Both the context processor 150 and the similarity processor 155 would also need efficient input/output (IO) circuits to perform fast data transfers to and from the vector database 140 and the prompt processing unit 160.

The prompt processing unit 160 receives results from the context processor 150 and the similarity processor 155 to further provide guidance to steer the LLM 170 to the appropriate direction. Due to the amount of vast information processed by the LLM 170, there is a good chance that the LLM 170 strays into off topic areas, referred to as hallucinations. The prompt processing unit 160 narrows down the search space, based on the contextual information from the context processor 150 and the candidate vectors from the similarity processor 155 and additional information such as user's profile, background, or experience. The prompt processing unit 160 may import domain-specific knowledge data to generate proper directions for the query. It may interact with the context processor 150 and the similarity processor 155 in generate prompts to the LLM 170. Accordingly, it would need a highly integrated system or processing elements and localized memory and IO or interface circuits including low power wide-IO solid-state storage circuits.

The LLM 170 obtains results from the prompt processing unit 160 including those of the context processor 150 and the similarity processor 155 to generate a response to the query. It also receives query information from the query processor 184. The LLM 170 includes a transformer model having computations that are partly offloaded to the tokenizer 120, the embedding processor 130, the context processor 150, and the similarity processor 155. It includes an encoder and decoder structure to create and process a contextualized representation of the query, a training model to learn the meaning of the query and process the query, an inference engine to reason for a proper response, and a fine-tuning structure to refine the responses based on the results of the context processor 150 and the similarity processor 155. Typically, the LLM 170 involves a massive amount of memory space and computations. Many of the computations may be performed in parallel where there is little or no dependency. Accordingly, the LLM 170 would need multiple highly integrated packages having several computational and memory elements with specific algorithms. This is most efficient by multiple ASICs with direct accesses to local memory devices.

The response formatter 182 receives one or more responses from the LLM 170. These responses correspond to the user query or queries. The response formatter 182 formats these responses in proper format and presentation style which may include graphics and animation. The result is then delivered to the user 180. Due to the amount of computations and IO interactions, the response formatter 182 is best implemented by a highly integrated subsystem 190 which includes multiple processors, memory (e.g., LPDDR6), wide-IO solid state storage devices, and IO circuits.

The query processor 184 processes the query from the user 180. This process may include tokenization as done by the tokenizer 120 and other formatting operations to convert the user's query into a form that can be further processed. The results of the query processor 184 are delivered to the embedding processor 130, the context processor 150, and the LLM 170. Though the computations in the query processor 184 may or may not be extensive, it often needs fast processing time and specialized procedures. Accordingly, the query processor 184 is best implemented by a highly integrated subsystem multiple processors, memory (e.g., LPDDR6), low power wide-IO solid-state storage circuits, and IO circuits.

The user 180 may be any user of the system and may include an individual, a team of people, or a computerized process. The user 180 may have a query that is in the public domain and expect the results to be obtained from the public domain. The user 180 may also be a user who has a private query that is particularized for the platform the user 180 is using. For example, the user 180 may be an individual who is interested in knowing the products offered by a company XYZ. As another example, the user 180 may belong to an organization such as a union or an association who want to query a particular subject that is relevant only to that organization. Under this private setting, the internal database 110 is relevant.

The HBM processing system 190 provides highly integrated resources for the various components in the system 100. These resources may include processing elements, memory for computations, data storage, data communications, and other specialized functions. The HBM processing system 190 may be used in any one of the tokenizer 120, the embedding processor 130, the context processor 150, the similarity processor 155, the prompt processing unit 160, the LLM 170, the resource formatter 182, or the query processor 184, or any combination of these elements.

The system 100 is an example that illustrates the role of HBM circuits in high computing (HC) platforms. The use of a query application in AI shows that many HC platforms require several HBM circuits, including stacked DRAMs operating in conjunction with processing units or IO circuits. In many cases, the environment of the applications adds additional requirements including low power consumption, reliable signal integrity, fault-tolerance, and reliable operations in extreme conditions including heat and tight space. Examples of other applications that would benefit from a highly integrated HBM design include mobile communication (e.g., smart phones, base stations, user equipment), cameras, vehicles, entertainment (e.g., games, multimedia, music, movies), technical designs (e.g., animation, graphics), medical (e.g., visualization, medical imaging), robotics, drones, automatic test equipment, audio processing, speech synthesizer, video and image analysis, vision, automatic face recognition, artificial intelligence (AI) applications, and data centers.

In the following, the description will focus on several embodiments of the HBM processing system 190, including the management of memory and processor operations.

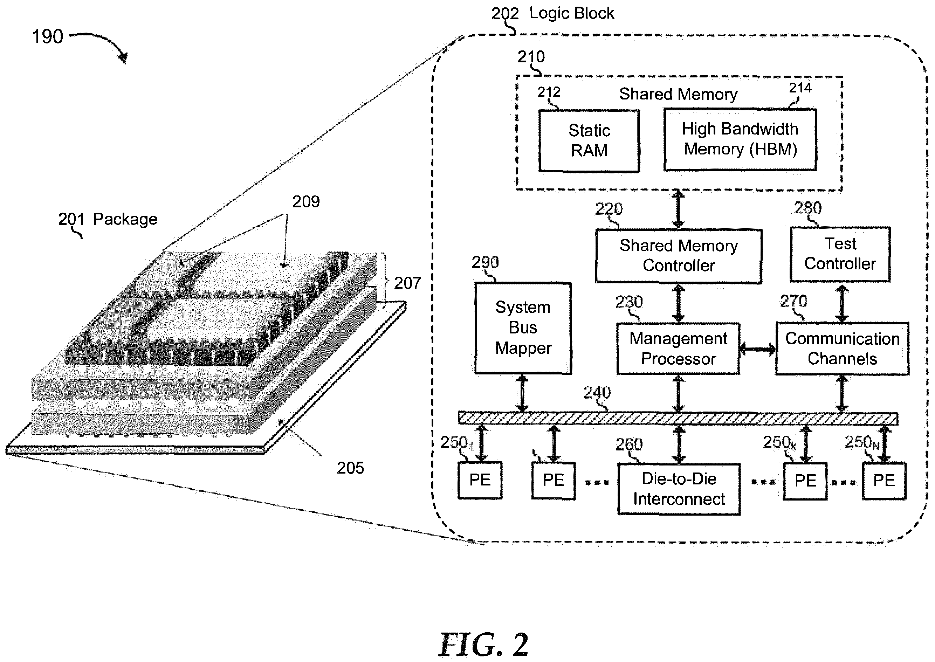

FIG. 2 is a diagram illustrating the HBM processing system 190 shown in FIG. 1 according to an embodiment. The HBM processing system 190 may include a physical package 201 and a logic block 202. The package 201 may include a base die 205 and a stack of memory dies 207. The logic block 202 represents the components in the physical package 201. It may include a shared memory 210, a shared memory controller 220, a management processor 230, a bus 240, N processing elements (PEs) 250ₖ's (k=1, ..., N), a die-to-die (D2D) interconnect 260, communication channels 270, a test controller 280, and a system bus mapper 290. The HBM processing system 190 may include more or less than the above components.

The HBM processing system 190 may be fabricated in a system in a package or system-in-package (SIP) which may include multiple components, digital and/or analog, passive and/or active, including chips, modules. It combines all these components in a single package to perform the functions of an entire system. It may be part or a large system which includes several SIPs. In one embodiment, it may include several dies stacked on each other to form a 3-D package. The base die 205 may be configured to be at the base of the package and integrate heterogenous components including processors, special circuits, communication channels, and memories. The stack 207 may include several memories dies that form a 3-D stack as part of an HBM design to offer high bandwidth, low latency, low power consumption, and high storage capacity to meet the demands of high-performance computing applications such as AI, ML, graphics processing, neural computations, signal and image processing. Each die may include components 209. The stack 207 has a wide memory bus. For example, a stack of four DRAM dies may have two 128-bit channels per die to provide a memory bus width of 1,024 bits. Multiple stacks may be combined to provide an even wider bus. The HBM stack 207 may also have processing-in-memory (PIM) capability.

The shared memory 210 may be shared by multiple devices including the management processor 230 and the N PEs 250ₖ's (k=1, ..., N). It may include a shared static random-access memory (SRAM) 212 and an HBM 214. The SRAM 212 includes volatile memories for fast access. It may also include register files or first-in-first-out (FIFO) structures. It may have buffered input/output interfaces to allow access from multiple devices. In one embodiment, for AI and/or ML applications, the shared SRAM 212 may be configured to store temporary activation data. It may also be used for preloading kernel binaries, collecting or buffering partial reduction data from neighboring HBM modules or packages. The HBM 214 represents the stack 207 in the package 201. The shared memory controller 220 controls the shared memory 210 including the SRAM and HBM control such as read/write controls, row and column addresses, pre-charge control, and bank select.

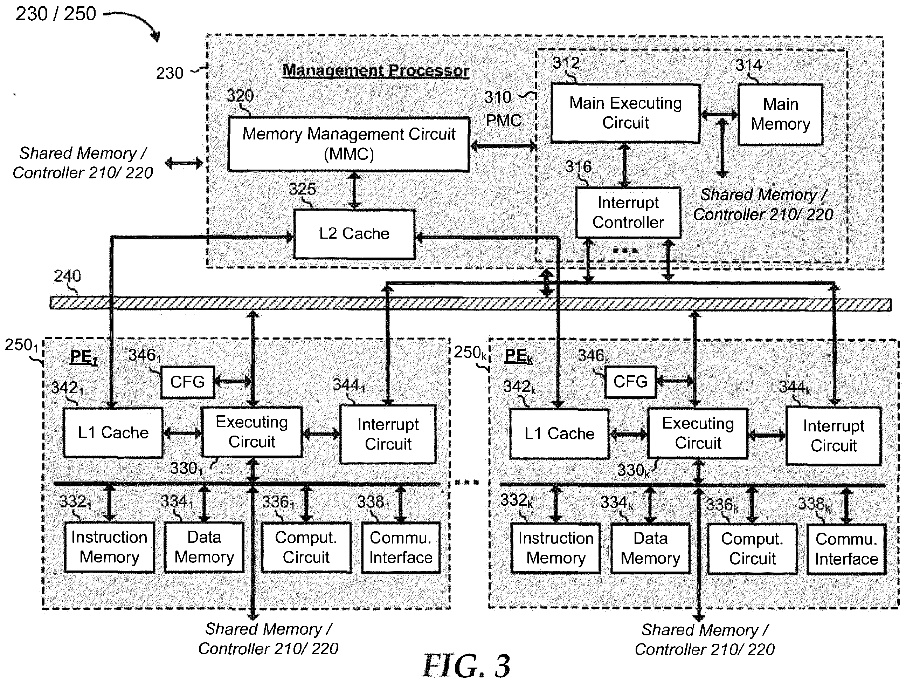

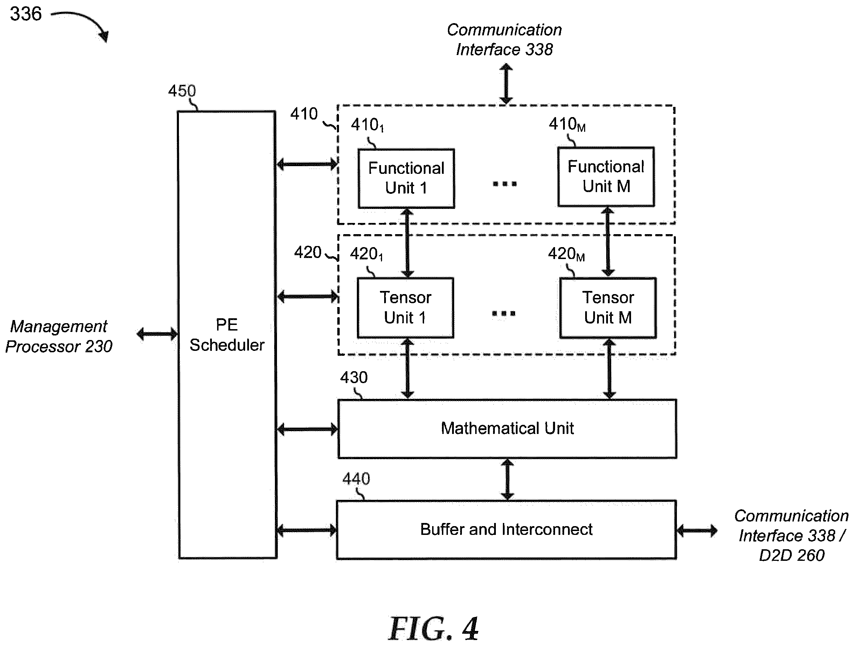

The management processor 230 performs the management functions for the shared memory 210 and the processing operations within itself and the PEs 250ₖ's (k=1, ..., N). It may communicate with one or more PEs 250ₖ's via the bus 240 and/or the communication channel 270. It may control the PEs 250ₖ's to perform assigned tasks. FIG. 3 will show the management processor 230 in more detail. The bus 240 is connected to the management processor 230, the N PEs 250ₖ's (k=1, ..., N), the D2D interconnect 260, the communication channels 270, and the system bus mapper 290. It allows components to communicate with one another. It may transmit and receive data, addresses, and commands. The N PEs 250ₖ's (k=1, ..., N) include computational resources that perform computations or calculating operations for the assigned tasks. They may operate asynchronously or synchronously under the control of the management processor 230. They have their own private memories that contain instructions or programs and data. Any one of the PEs is configured to execute its own programs or instructions. FIGS. 3 and 4 describe the PEs in more detail. In the following, for clarity, the index k in multiple PEs 250ₖ's may be dropped.

The D2D interconnect 260 provides circuit interfaces for dies integrated within close proximity in the package 201. The D2D interconnect 260 facilitates modular design, improves signal integrity, increases bandwidth. In one embodiment, the D2D interconnect 260 may include at least one of Universal Chiplet Interconnect Express (UCIe), Advanced Interface Bus (AIB), or Bunch of Wires (BoW). The communication channels 270 include channels that support communication and/or data transfers. In one embodiment, the communication channels 270 may include direct memory access (DMA) channels, through silicon via (TSV) channels, Ultra Accelerator Link (UALink). The test controller 280 controls the testing of the SIP 201. This may include a core die test block in the shared HBM 214, Memory Built-in Self-Test (MBIST), circuits to support IEEE1500 standard, and D2D loopback control. It may also include debugging features, performance monitor, Joint Test Action Group (JTAG) support, tracing instructions and data, and telemetry support. The system bus mapper 290 maps the signals to a system bus interface to allows interconnections between various HBM packages.

FIG. 3 is a diagram illustrating the management processor 230 and multiple processing elements 250ₖ's (k=1, ..., N) according to an embodiment. The management processor 230 and multiple processing elements 250ₖ's maintain a tight communication interface via at least the bus 240 and other separate lines. The multiple PEs 250ₖ's operate under the control and management of the management processor 230. Once enabled and started, each of the PEs 250 may execute its own programs and access data in its private instructions memory and data memory. The management processor 230 provides a layer of abstraction for the overall architecture. In essence, it hides the complexity of the program execution from the user or the high-level application. The application program may specify what needs to be done and the management processor 230 will take care of the details of how to carry out by allocating or assignment of the tasks to the individual PEs.

The management processor 230 includes a processing management circuit (PMC) 310 and a memory management circuit (MMC) 320. Each of the PEs 250ₖ's (k=1, ..., N) includes an executing circuit 330ₖ, an instruction memory 332ₖ, a data memory 334ₖ, a computational circuit 336ₖ, a communication interface 338ₖ, an L1 cache 342ₖ, an interrupt circuit 344ₖ, and a configuration (CFG) circuit 346ₖ. The management processor 230 and the PE 250ₖ may include more or less than the above components. In the following, for clarity, the index k for the PE 250ₖ may be dropped.

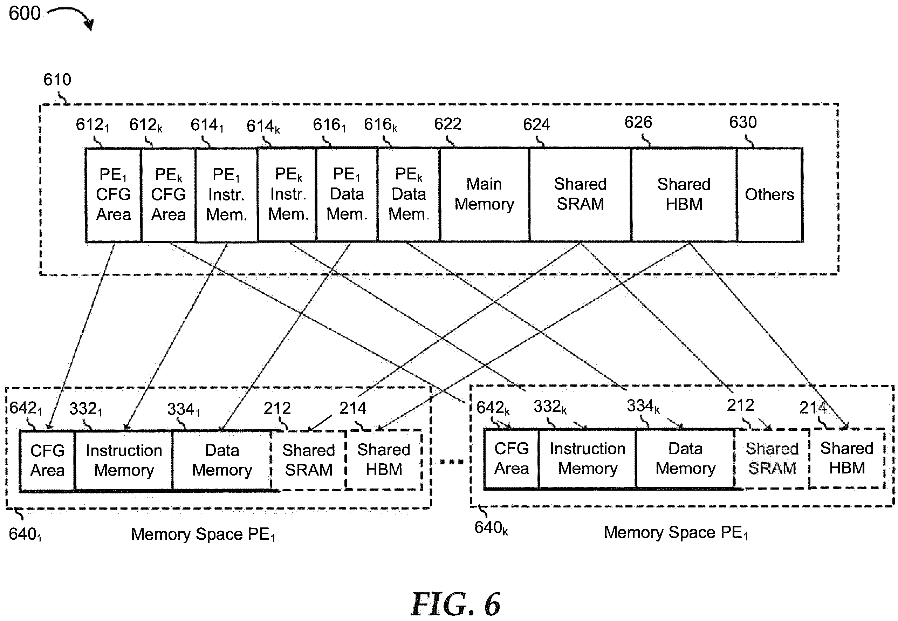

The PMC 310 includes a main executing circuit 312, a main memory 314, and an interrupt controller 316. It is configured to manage at least one processor operation performed by at least one of the PEs 250. The processor operation may include at least one of a program launch, a program execution, and an interrupt delivery. The main executing circuit 312 may be a processing unit or circuit that can execute a program or instructions stored in the main memory 314. The main memory 314 is private to the PMC 310. It may be any suitable type of memory such as DRAM, SRAM, or SSD or any combination of them. The main memory 314 may include a page table to translate the virtual pages into physical pages as part of the memory management tasks done by the MMC 320. The main executing circuit 312 may also have access to the shared memory 210 via the shared memory controller 220. As will be shown in FIG. 6, the main executing circuit 312 views the PEs 250's and the shared memory 210 as occupying a single unified memory space. This mapping simplifies the control and allows the PMC 230 to have an efficient management and control over the PEs 250's. The interrupt controller 316 controls and manages the interrupt requests and interrupt services from/to the PEs 250's. This may include prioritizing the interrupt requests and transmit commands or messages to the PEs 250's.

The MMC 320 is configured to manage a memory operation on the shared memory 210 based on a memory access by at least one of the PMC 310 and the PEs 250's. The memory operation may include at least one of a page table update, a translation lookaside buffer (TLB) update, a cache response, and an access violation response. The L2 cache 325 may be configured to function as a translation lookaside buffer (TLB) to translate a virtual memory to physical memory. The L2 cache 325 is typically implemented by a fast memory such as fast SRAM to allow the MMC 320 to quickly retrieve the virtual-to-physical page mappings without accessing the slower page table. It may also be used as a cache storage to provide fast response to memory accesses. The MMC 320 may update the page table in the main memory 314 or the TLB in the L2 cache 325 when there are new entries in the table. The MMC 320 may respond to any access violations such as non-existent memory addresses, buffer overflow, null pointer, etc. It may report any violations to the test controller 280 for debugging or testing purposes.

The executing circuit 330 is configured to be a circuit that can execute a program, instructions, or commands stored in the instruction memory 332. The executing circuit 330 may access data stored in data memory 334. The data memory 334 may be used to store temporary data and data structures such as stack or heap for program execution. The instruction and data memories 332 and 334 are private or local to the associated PE and may be implemented by any suitable memories including DRAM, SRAM, or SSD or any combination of them. It may also have access to the shared memory 210 via the shared memory controller 220. The computational circuit 336 is configured to perform logic and/or computational operations. The computational circuit 336 will be described in more detail in FIG. 4. The communication interface 338 provides interface for communication between the PEs and between the associated PE with the management processor 230. The L1 cache 342 provides fast cache memory to the executing circuit 330. It may be used to implement the TLB for address translation. It may be connected to the L2 cache 325 in the management processor 230 for additional cache operations. By allowing the L1 cache 342 in each PE to communicate with the L2 cache 325, the PEs may share information among themselves. The interrupt circuit 344 provides services for interrupt requests and responses among the PEs for inter-processor interrupts (IPI) and between the PEs and the management processor 230. It generates an IPI to another PE and receives an IPI response from another PE. The PEs may preload data or status in the shared memory 210 prior to requesting an interrupt so that the other PE may retrieve the data when servicing the interrupt. It may also generate an interrupt to the main executing circuit 312 through the interrupt controller 315 when the PE requests a service or reports a status. For example, the PE may send an interrupt to the main executing circuit 312 when it completes a currently assigned task. Prior to sending the interrupt, it may transmit messages, results, data, status, or condition to the shared memory 210 (e.g., the shared SRAM 212) to allow the main executing circuit 312 to check the messages when it responds to the interrupt. This allows an efficient communication protocol between the PEs and the management processor 230. The CFG circuit 346 includes CFG data that configures the PE 250 to perform operations or calculations as required. The CFG circuit 346 may also enable or disable the PE under the control of the management processor 230.

FIG. 4 is a diagram illustrating the computational circuit 336 shown in FIG. 3 in a processing element according to an embodiment. The computational circuit 336 provides the associated PE with the ability to perform independent computations or operations as part of the overall computational process in the system 100 shown in FIG. 1. In many applications, especially in AI, ML, signal and image processing, there are some basic computational blocks that are often used. These computational blocks may include accumulation, matrix and vector calculations (e.g., matrix multiplication). The computational circuit 336 includes a functional unit 410, a tensor unit 420, a mathematical unit 430, a buffer and interconnect 440, and a scheduler 450. The computational circuit 336 may include more or less than the above components. The computational circuit 336 communicates with the communication interface 338 to receive inputs (e.g., data, operands) and transmit outputs (e.g., results), and the management processor 230 to receive commands or instructions and transmits results or status.;

The functional unit 410 includes M functional units 410ⱼ's (j = 1, ..., M). Each of the M functional units 410ⱼ's may perform logic operations (e.g., AND, OR), basic arithmetic (e.g., add, subtract). The tensor unit 420 includes M tensor units 420ⱼ's (j=1, ..., M). Each of the M tensor units 410ⱼ's may perform tensor operations including vector, matrix, and array calculations such as general matrix multiply (GMM). Due to the popularity of matrix multiplication in nay applications, the tensor units 420ⱼ's may be referred to as a GMM engine. The mathematical unit or engine 430 performs additional mathematical operations. These may include element-wise operations on floating-point numbers, including basic math, exponentiation, and trigonometric functions, and special functions such as softmax, normalization.

The buffer and interconnect 440 provides temporary storage for results or intermediate data. It may also include interconnection network to allow data transfers at high speed. It may be connected to the communication interface 338 and/or the D2D interconnect 260 for connecting or routing to other components, dies, or packages. The PE scheduler 450 schedules the operations as commanded by the management processor 230. The scheduler 450 may specify the order of operations or the conditions when an operation is to be performed.

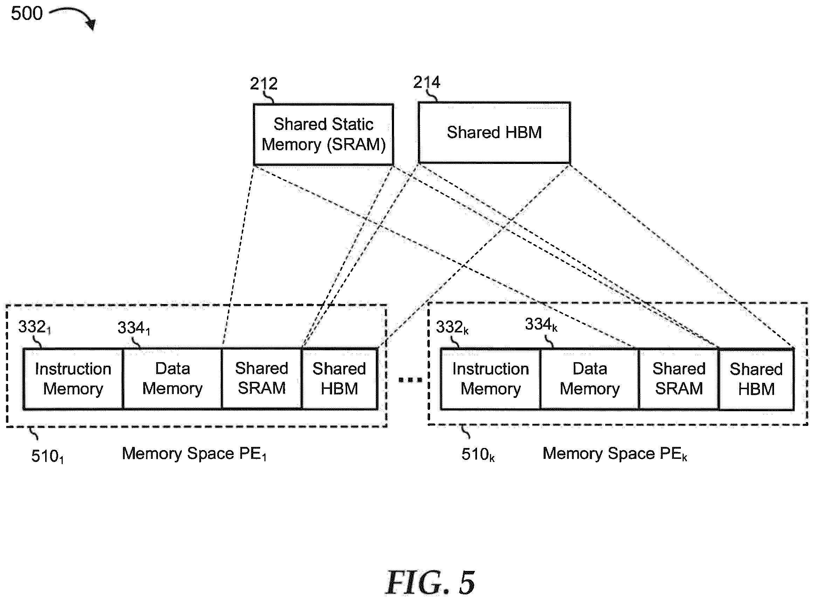

FIG. 5 is a diagram illustrating a memory space 500 viewed from a PE according to an embodiment. The memory space 500 includes N memory spaces 510ₖ's (k=1, ..., N) for the PEs 250ₖ's. Each PE has a uniform memory map as shown in the corresponding memory space 510_{k.} For clarity, the index k may be dropped.

The memory space 510 includes the memory address ranges corresponding to the instruction memory 332, the data memory 334, the shared SRAM 212, and the shared HBM 214. The instruction memory 332 and the data memory 334 are private to the PE while the shared SRAM 212 and the shared HBM 214 are shared among the PEs and the PMC 230. In other words, the shared memory 210, the instruction memory 332, and the data memory 334 are mapped into the memory space of the PE. When the instruction memory 332 and the data memory 334 have the same size across the PEs, this mapping scheme provides an efficient memory management. Since all PEs have the same memory mapping, a program written for a PE may be executed by another PE without changing the addresses. This is especially useful in a multiprocessor system when multiple PEs perform the same operations in parallel.

FIG. 6 is a diagram illustrating a memory space 600 viewed from the management processor 230 according to an embodiment. The memory space 600 includes the memory space 610 for the management processor 230 and the N memory spaces 640ⱼ's (j=1, ..., N) for the PEs 250ⱼ's. The memory space 610 includes fields that correspond to the physical memories in the N PEs.

The memory space 610 include N fields 612ₖ's for the CFG area in the PE 250ₖ (k=1, ..., N), N fields 614ₖ's for the instruction memory in the PE 250ₖ (k=1, ..., N), N fields 616ₖ's for the data memory in the PE 250ₖ (k=1, ..., N), a field 622 for the main memory, a field 624 for the shared SRAM, a filed 626 for the shared HBM, and a field 630 for others. In other words, the shared memory, the sets of configuration data the instruction memories, and the data memories in the PEs are mapped into the memory space of the main executing circuit 312. Accordingly, from the management processor 230, the address space is unified for all PEs including the shared memories. This will facilitate memory management, program management, and communication among the PEs and the management processor 230.

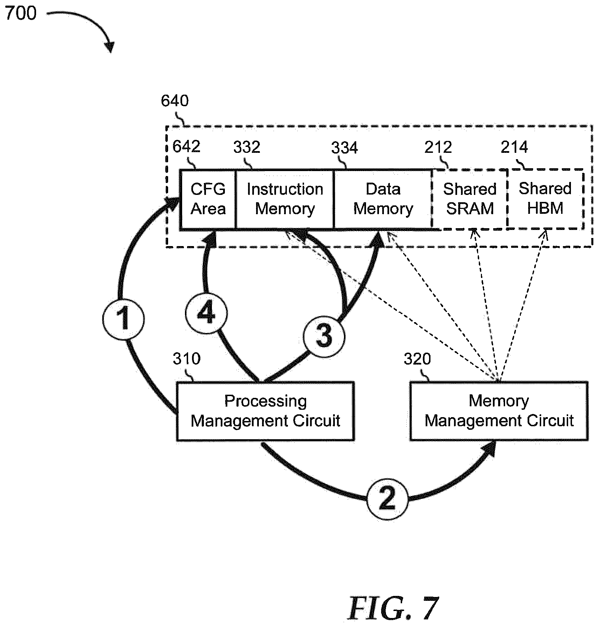

FIG. 7 is a diagram illustrating a sequence 700 of program launching according to an embodiment. The sequence 700 represents the steps when the PMC 310 launches a program execution at a PE. The sequence 700 includes steps 1, 2, 3, and 4.

At step 1, the PMC 310 pauses the PE to allow initialization and configuration of operating parameters. It initializes the configuration data in the configuration circuit 336 in the PE. The configuration data establishes the parameters for program execution or bootstrapping and control data for the PE. These parameters may include information necessary for program execution such as the starting address of the program, the starting address of the data, allocated memory space, memory stack, interrupt priority, and any other relevant information.

At step 2, the PMC 310 initializes the instruction memory332 and the data memory 334 such as preload parameters. It may also configure the shared SRAM 212 and the shared HBM 214 for any information or data that can be shared with other PEs. At step 3, the PMC 310 may prepare the instruction memory 332 and the data memory 334 for program execution. This may include populating a page table and initializing the MMC 320, downloading program code to the instruction memory 332, setting up breakpoints if necessary, and allocating storage for testing and debugging parameters. At step 4, when everything is ready to be executed, the PMC resets the PE by enable the reset control in the CFG circuit which starts the PE for execution. Upon being reset, the PE obtains the reset start vector and executes the program.

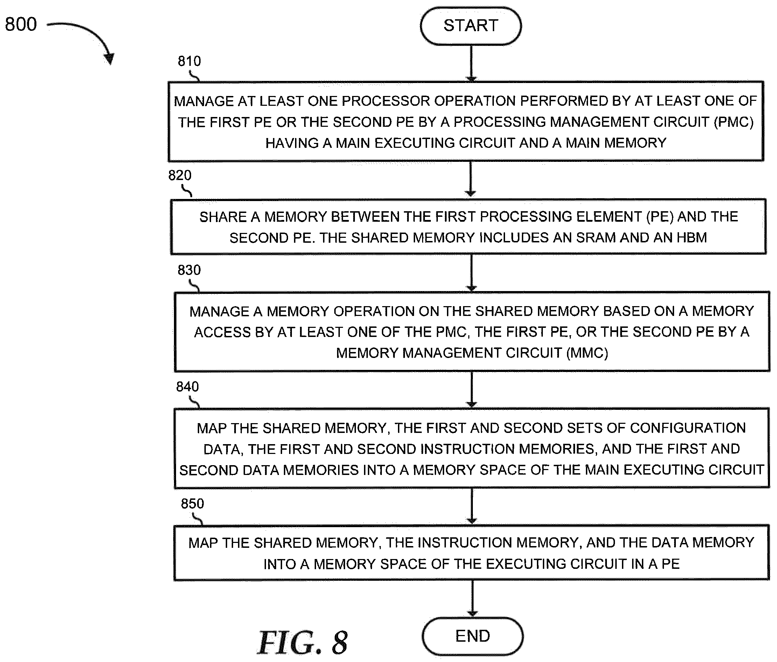

FIG. 8 is a flowchart illustrating a process 800 for managing an HBM system with multiple PE's according to an embodiment. The process 800 includes operations described in the blocks. The blocks are mainly for illustrative purposes. These operations may not necessarily be performed in the order as shown and the operations may be performed in parallel or in an overlapping manner.

Upon START, the process 800 manages at least one processor operation performed by at least one of a first processing element (PE) or a second PE by a processing management circuit (PMC) having a main executing circuit and a main memory (Block 810). The processor operation may include at least one of a program launch, a program execution, and an interrupt delivery. Next, the process 800 shares a memory between the PMC, the first PE, and the second PE (Block 820). The shared memory may include a shared SRAM and a shared HBM.

Next, the process 800 manages a memory operation on the shared memory based on a memory access by at least one of the PMC, the first PE, or the second PE by a memory management circuit (MMC) (Block 830). The memory operation may include at least one of a page table update, a translation lookaside buffer (TLB) update, a cache response, and an access violation response.

Then, the process 800 maps the shared memory, the first and second sets of configuration data, the first and second instruction memories, and the first and second data memories into a memory space of the main executing circuit (Block 840). This operation corresponds to FIG. 6. The mapping results in a unified address space as viewed from the management processor. Next, the process 800 maps the shared memory, the instruction memory, and the data memory into a memory space of the executing circuit in the PE (Block 850). The process 800 is then terminated.

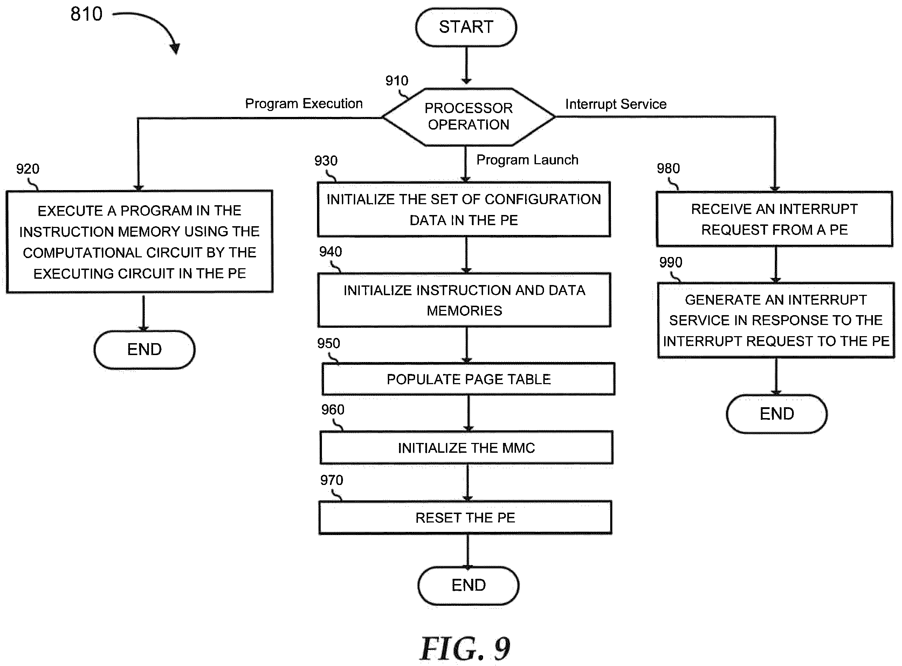

FIG. 9 is a flowchart illustrating the process 810 of managing a processor operation shown in FIG. 8 according to an embodiment.

Upon START, the process 810 determines the type of processor operation (Block 910). If it's a program execution, the process 810 executes a program in the instruction memory using the computational circuit by the executing circuit in the PE (Block 920) and is then terminated. If it's a program launch, the process 810 initializes the set of configuration data in the PE (Block 930). Next, the process 810 initializes the instruction and data memories in the PE (Block 940). Then, the process 810 populates a page table in preparation for address translation (Block 950). Next, the process 810 initializes the MMC (Block 960). Then, the process 810 resets the PE (Block 970). This enables the PE to obtains the vector address for program execution. The PE then starts executing the program. The process 810 is then terminated. If the processor operation is an interrupt service, the process 810 receives an interrupt request from, a PE (Block 980). Next, the process 810 generates an interrupt service in response to the interrupt request to the PE (Block 990) and is then terminated.

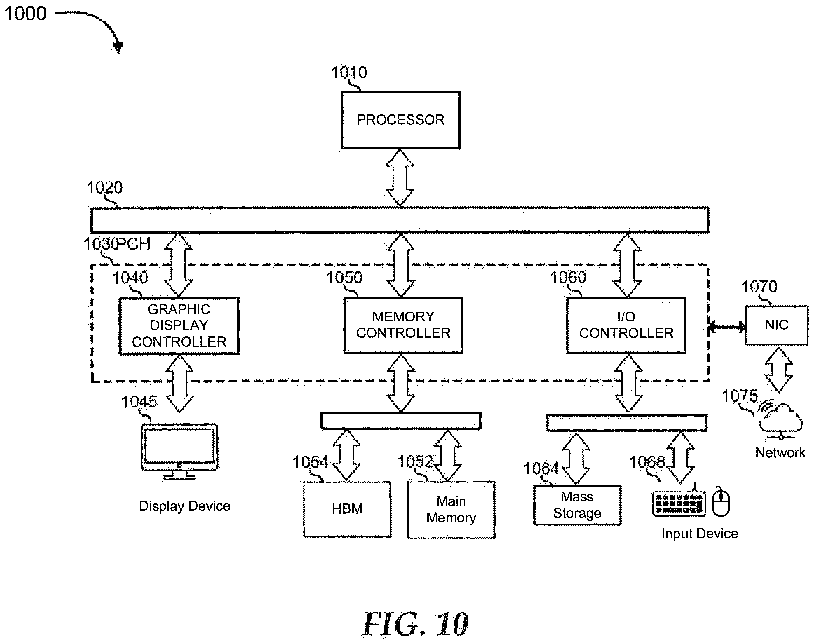

FIG. 10 is a diagram illustrating a computing or processing system 1000 according to an embodiment. The computing system 1000 may be a system in which the HBM processing system may be deployed. It may supplement or replace any one or more of the blocks shown in FIG. 1. It may partially perform the task of the computer at the user 180 in FIG. 1 or the management processor 230 shown in FIG. 2. It includes a central processing unit (CPU) or a processor 1010, a bus 1020, and a platform controller hub (PCH) 1030. The PCH 1030 may include a graphic display controller (GDC) 1040, a memory controller 1050, and an input/output (I/O) controller 1060. The processing system 1000 may include more or less than the above components. In addition, a component may be integrated into another component. As shown in FIG. 10, all the controllers 1040, 1050, and 1060 are integrated in the PCH 1030. The integration may be partial and/or overlapped. For example, the GDC 1040 may be integrated into the processor 1010, the I/O controller 1060 and the memory controller 1050 may be integrated into one single controller, etc.

The processor 1010 is a programmable device that may execute a program or a collection of instructions to carry out a task. It may be a general-purpose processor, a digital signal processor, a microcontroller, or a specially designed processor such as one design from Applications Specific Integrated Circuit (ASIC). It may include a single core or multiple cores. Each core may have multi-way multi-threading. The processor 1010 may have simultaneous multithreading feature to further exploit the parallelism due to multiple threads across the multiple cores. In addition, the processor 1010 may have internal caches at multiple levels.

The bus 1020 may be any suitable bus connecting the processor 1010 to other devices, including the PCH 1030. For example, the bus 1020 may be a Direct Media Interface (DMI).

The PCH 1030 is a highly integrated chipset that includes many functionalities to provide interface to several devices such as memory devices, input/output devices, storage devices, network devices, etc.

The I/O controller 1060 controls input devices 1068 (e.g., stylus, keyboard, and mouse, microphone, image sensor) and output devices (e.g., audio devices, speaker, scanner, printer), and a mass storage 1064. The mass storage 1064 may also include CD-ROM, hard disk, and SSDs. It also has a network interface card (NIC) 1070 which provides an interface to a network and wireless medium 1075.

The memory controller 1050 controls memory devices such as a main memory 1052 and an HBM 1054. The main memory 1052 includes random access memory (RAM) and/or the read-only memory (ROM) and other types of memory such as the cache memory or an SSD. The main memory 1052 may store instructions or programs, loaded from a mass storage device, that, when executed by the processor 1010, cause the processor 1010 to perform operations as described above. It may also store data used in the operations. The ROM may include instructions, programs, constants, or data that are maintained whether it is powered or not. The instructions or programs may correspond to the functionalities described above.

The GDC 1040 controls a display device 1045 and provides graphical operations. It may be integrated inside the processor 1010. It typically has a graphical user interface (GUI) to allow interactions with a user who may send a command or activate a function.

Additional devices or bus interfaces may be available for interconnections and/or expansion. Some examples may include the Peripheral Component Interconnect Express (PCIe) bus, the Universal Serial Bus (USB), etc.

All or part of an embodiment may be implemented by various means depending on applications according to particular features, functions. These means may include hardware, software, or firmware, or any combination thereof. A hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. An apparatus comprising:
a processing management circuit, PMC, having a main executing circuit and a main memory and configured to manage at least one processor operation performed by at least one of a first processing element, PE, or a second PE;
a shared memory configured to be shared by the PMC, the first PE, and the second PE; and
a memory management circuit, MMC, configured to manage a memory operation on the shared memory based on a memory access by at least one of the PMC, the first PE, or the second PE;
wherein the at least one processor operation includes at least one of a program launch, a program execution, and an interrupt delivery.

2. The apparatus of claim 1,
wherein the shared memory includes at least one of a shared static random-access memory, SRAM, and a high-bandwidth memory, HBM, and
wherein the memory operation includes at least one of a page table update, a translation lookaside buffer, TLB, update, a cache response, and an access violation response.

3. The apparatus of claim 1 or 2,
wherein the first PE includes a first executing circuit, a first set of configuration data, a first instruction memory, a first data memory, and a first computational circuit,
wherein the second PE includes a second executing circuit, a second set of configuration data, a second instruction memory, a second data memory, and a second computational circuit,
wherein the first instruction memory and the first data memory are private to the first PE, and
wherein the second instruction memory and the second data memory are private to the second PE.

4. The apparatus of claim 3, wherein the program launch includes initializing one of the first or second set of configuration data, initializing one of the first or second instruction memories, initializing one of the first or second data memories, populating a page table, initializing the MMC, and resetting the at least one of the first or second PEs.

5. The apparatus of claim 3 or 4,
wherein the first PE performs the program execution by the first executing circuit executing a first program in the first instruction memory using the first computational circuit, and
wherein the second PE performs the program execution by the second executing circuit executing a second program in the second instruction memory using the second computational circuit.

6. The apparatus of any one of claims 3 to 5,
wherein the interrupt delivery includes an interrupt request from one of the first or second PE and an interrupt service in response to the interrupt request to the one of the first or second PE.

7. The apparatus of any one of claims 3 to 6,
wherein the shared memory, the first and second sets of configuration data, the first and second instruction memories, and the first and second data memories are mapped into a memory space of the main executing circuit.

8. The apparatus of any one of claims 3 to 7,
wherein the shared memory, the first instruction memory, and the first data memory are mapped into a first memory space of the first executing circuit, and
wherein the shared memory, the second instruction memory, and the second data memory are mapped into a second memory space of the second executing circuit.

9. The apparatus of any one of claims 1 to 8, wherein at least one of the first computational circuit or the second computational circuit includes at least one of a general matrix multiply, GMM, engine or a mathematical, MATH, engine.

10. The apparatus of any one of claims 1 to 9, further comprising a cache memory accessible to the MMC and at least one of the first PE or the second PE.

11. A method comprising:
managing at least one processor operation performed by at least one of a first processing element, PE, or a second PE by a processing management circuit, PMC, having a main executing circuit and a main memory;
sharing a memory between the PMC, the first PE, and the second PE; and
managing a memory operation on the shared memory based on a memory access by at least one of the PMC, the first PE, or the second PE by a memory management circuit, MMC,
wherein the at least one processor operation includes at least one of a program launch, a program execution, and an interrupt delivery.

12. The method of claim 11,
wherein the shared memory includes at least one of a shared static random-access memory, SRAM, and a high-bandwidth memory, HBM, and
wherein the memory operation includes at least one of a page table update, a translation lookaside buffer, TLB, update, a cache response, and an access violation response.

13. The method of claim 11 or 12,
wherein the first PE includes a first executing circuit, a first set of configuration data, a first instruction memory, a first data memory, and a first computational circuit,
wherein the second PE includes a second executing circuit, a second set of configuration data, a second instruction memory, a second data memory, and a second computational circuit,
wherein the first instruction memory and the first data memory are private to the first PE, and
wherein the second instruction memory and the second data memory are private to the second PE.

14. The method of claim 13, wherein managing the at least one processor operation comprises managing the program launch comprising:
initializing one of the first or second set of configuration data;
initializing one of the first or second instruction memories;
initializing one of the first or second data memories;
populating a page table;
initializing the MMC; and
resetting the at least one of the first or second PEs.

15. The method of claim 13 or 14, wherein managing the at least one processor operation comprises managing the program execution comprising at least one of:
executing a first program in the first instruction memory using the first computational circuit by the first executing circuit in the first PE, or
executing a second program in the second instruction memory using the second computational circuit by the second executing circuit in the second PE.
